# FASCICULE DE BREVET EUROPEEN

(11) **EP 3 035 437 B1**
(45) Date de publication et mention de la délivrance du brevet: **09.05.2018**
(21) Numéro de dépôt: 15200271.3
(22) Date de dépôt: 15.12.2015
(51) Int. Cl.: H01Q 1/02, H01Q 1/28, H01Q 13/02, H01Q 23/00, H01Q 1/36

(54) **SOURCE MONOLITHIQUE D'ANTENNE POUR APPLICATION SPATIALE**
MONOLITHISCHE QUELLE EINER ANTENNE FÜR RAUMANWENDUNG
MONOLITHIC ANTENNA SOURCE FOR USE IN SPACE

(30) Priorité: 17.12.2014 FR 1402878
(43) Date de publication de la demande: 22.06.2016
(73) Titulaire: THALES, 92400 Courbevoie (FR)
(72) Inventeur: LEBRUN, Florent, 31410 MAUZAC (FR); MARTINEAU, Patrick, 31700 BLAGNAC (FR); ERBLAND, Valérie, 31600 LABASTIDETTE (FR); CAIRE, Karine, 31100 TOULOUSE (FR)
(74) Mandataire: Brunelli, Gérald

(56) Documents cités:
- EP-A1- 2 637 254
- US-A1- 2004 174 651
- US-A1- 2009 284 436
- US-B1- 6 297 775

## Description

Le domaine de l'invention concerne les antennes d'émission/réception configuré pour des applications spatiales, et notamment, les antennes embarquées sur des satellites. L'invention concerne, plus particulièrement, les sources d'antennes. Le document de l'art antérieur US 6 297 775 divulgue un réseau d'antenne pour application spatiale. La figure 1 représente un schéma de principe d'une source d'antenne 1 comprenant un ensemble de composants RF 2 transmettant et traitant des ondes en émission ou réception, l'élément d'adaptation 3, plus couramment nommé, « cornet » et l'ensemble de composants RF 2 ayant une section Sec commune. Habituellement, la section Sec commune entre l'ensemble de composants RF 2 et l'élément d'adaptation 3 présente une faible surface par rapport à la surface de la face de sortie Fs de l'onde générée par l'ensemble de composants RF 2.

Généralement, l'élément d'adaptation 3 est de forme conique permettant une adaptation progressive des ondes électromagnétiques entre le point de couplage et un récepteur.

A l'heure actuelle, il existe une demande croissante pour augmenter la quantité d'équipements embarqués. Aussi, les composants RF doivent traiter plus de données ce qui requiert une quantité de puissance électrique plus importante et entraîne une augmentation de l'énergie thermique dissipée par l'ensemble de composants RF 2.

L'augmentation de la température de la source 1, et, plus particulièrement, de l'ensemble composants RF 2 entraîne certains inconvénients :
- d'une part, cette augmentation de température engendre une baisse des performances de l'ensemble de composants RF 2. Les performances de certains composants RF se trouvent dégradées lorsque la température environnante est supérieure à une valeur seuil.
- d'autre part, cette augmentation de température engendre des déformations thermo-élastiques des matériaux utilisés pour réaliser l'ensemble de composants RF 2 posant des problèmes de déformation et dimensionnement thermo-élastiques. En effet, la section Sec commune entre l'ensemble de composants RF 2 et la surface rayonnante 3 étant faible, le transfert d'énergie thermique entre l'ensemble de composants RF 2 et l'élément d'adaptation 3 n'est pas efficace. L'énergie thermique générée au niveau de l'ensemble de composants RF 2 s'accumule au niveau de l'ensemble de composants RF 2 ce qui génère un gradient de température entre l'ensemble de composants RF 2 et l'élément d'adaptation 3 pouvant excéder 100°C. La source 1 présente alors des déformations thermo-élastiques inhomogènes.

Actuellement, les moyens mis en oeuvre pour évacuer l'énergie thermique de l'ensemble de composants RF 2 reposent sur des systèmes d'échange thermique :
- la surface extérieure de l'ensemble de composants RF 2 est recouverte d'une peinture blanche. Le revêtement blanc améliore les propriétés d'émissivité de l'ensemble de composants RF 2 améliorant les capacités d'échange thermique de l'ensemble de composants RF 2 par rayonnement.
- l'ensemble de composants RF 2 est couplé à un radiateur recouvert d'une peinture blanche. L'utilisation d'un radiateur augmente la surface d'échange thermique vers l'Espace ce qui permet d'évacuer de l'énergie thermique de l'ensemble des composants RF 2 par conduction vers le radiateur puis vers l'Espace par rayonnement.
- l'ensemble de composants RF 2 est couplé à un radiateur recouvert d'éléments OSR, acronyme de « Optical Solar Reflector », en langue anglaise, les éléments OSR étant constitués de feuilles de silice argentées. Ces éléments OSR procurent une émissivité relativement élevée offrant ainsi de bonnes capacités de dissipation thermique par rayonnement. En outre, les éléments OSR présentent une absorptivité faible limitant l'entrée de rayonnement solaire notamment.

Les moyens connus proposés ci-dessus sont peu efficaces et nécessitent de grandes surfaces d'échange thermique peu compatibles avec les contraintes de masse et d'encombrement liées aux applications spatiales.

Aussi, un but de l'invention est de proposer une source d'antenne permettant une dissipation de l'énergie thermique générée par l'ensemble de composants RF efficace et compatible avec les contraintes des applications spatiales.

Selon un aspect de l'invention, il est proposé une source monolithique d'antenne pour application spatiale comprenant :
- un ensemble de composants RF véhiculant des ondes électromagnétiques et dissipant de l'énergie thermique, et
- un élément rayonnant d'ondes électromagnétiques ayant une surface rayonnante de révolution ou pyramidale,
la source comprenant en outre des moyens de transfert thermique s'étendant depuis l'ensemble de composants RF vers l'élément rayonnant d'ondes RF et sur au moins une partie de l'élément rayonnant RF (4) sensiblement selon un axe longitudinal (AL) de la source, ce dernier étant apte à évacuer de l'énergie thermique.

Le transfert de l'énergie thermique générée par l'ensemble de composants RF vers l'élément rayonnant permet d'augmenter efficacement les capacités de réjection thermique d'une source d'antenne vers le vide spatial.

On entend par surface de révolution une surface engendrée par une courbe quelconque qui tourne autour d'une droite fixe, de manière que chacun de ses points décrive un cercle dans un plan perpendiculaire à l'axe.

On entend par surface pyramidale une surface comprenant une base polygonale et des faces latérales triangulaires, les faces latérales ayant un sommet commun.

Préférentiellement, l'élément rayonnant est en forme de cône autorisant simultanément une adaptation progressive des ondes électromagnétiques et un échange thermique avec l'Espace.

Avantageusement, les moyens de transfert thermique s'étendent sur au moins une partie de l'ensemble de composants RF de sorte que les moyens de transfert thermique récupèrent ou emmagasinent l'énergie thermique dissipée par l'ensemble de composants RF.

Avantageusement, les moyens de transfert thermique, l'élément rayonnant et l'ensemble de composants RF sont monolithiques de sorte à limiter les contraintes thermiques liées aux différences de coefficient thermique. Alternativement, les moyens de transfert thermique comprennent un matériau différent de celui de l'élément rayonnant et de l'ensemble de composants RF.

Avantageusement, les moyens de transfert thermique s'étendent sur l'élément rayonnant de sorte que le transfert d'énergie thermique de l'ensemble de composants RF vers l'élément rayonnant soit homogène sur toute la surface de l'élément rayonnant.

Avantageusement, le moyen de transfert thermique est un caloduc. Alternativement, le moyen de transfert thermique est une boucle diphasique fluide.

Avantageusement, l'élément rayonnant présente des protubérances de manière à augmenter la surface d'échange thermique avec l'Espace.

Selon un autre aspect de l'invention, il est proposé un procédé de réalisation d'une source monolithique d'antenne spatiale comprenant un ensemble de composants RF véhiculant des ondes électromagnétiques et dissipant de l'énergie thermique et un élément rayonnant les ondes électromagnétiques générées par l'ensemble de composants RF, ayant une surface rayonnante de révolution pyramidale. La source comprend en outre des moyens de transfert thermique s'étendant depuis l'ensemble de composants RF vers l'élément rayonnant de l'onde et en surface de l'élément rayonnant sur au moins une partie de l'élément rayonnant RF sensiblement selon un axe longitudinal de la source, l'élément rayonnant étant apte à dissiper de l'énergie thermique est fabriqué par électroformage, ou en variante par une méthode de fabrication additive.

L'invention sera mieux comprise et d'autres avantages apparaîtront à la lecture de la description qui va suivre donnée à titre non limitatif, et, grâce aux figures annexées parmi lesquelles :
- la figure 1, déjà décrite, représente un schéma de principe d'une source d'antenne selon l'art connu,
- la figure 2 représente un schéma de principe d'une source d'antenne selon l'invention, et
- la figure 3 représente un moyen de thermique selon l'invention, et
- la figure 4 représente un schéma du principe d'une méthode de fabrication additive pouvant être utilisée pour la réalisation de la source d'antenne selon l'invention.

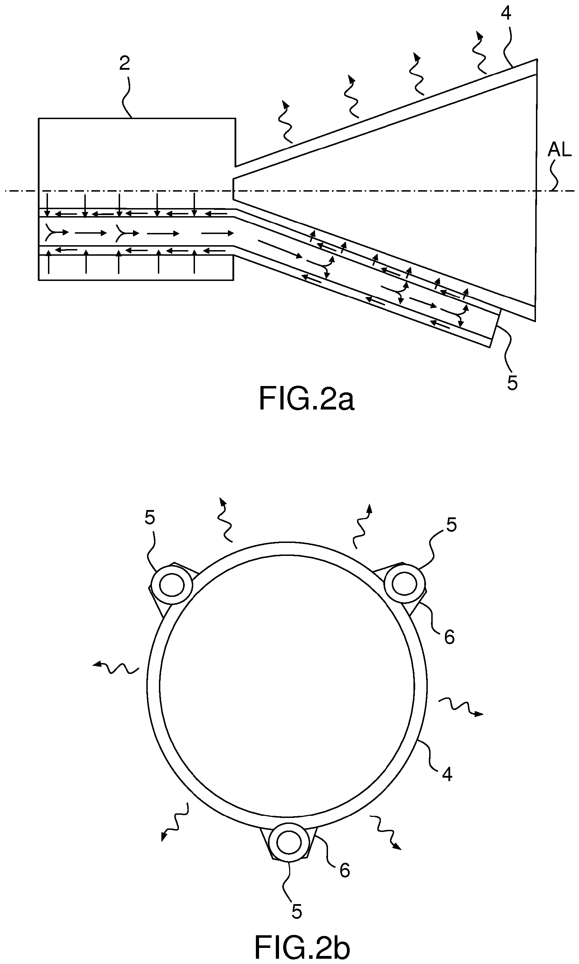

La figure 2 représente une source d'antenne 1 selon un aspect de l'invention.

La source comprend un ensemble de composants RF 2 et un élément rayonnant 4, l'élément rayonnant 4 permet l'adaptation des ondes électromagnétiques entre le point de couplage et un récepteur et l'échange thermique vers l'Espace. En d'autres termes, l'élément rayonnant 4 est un radiateur.

En l'espèce la source 1 d'antenne est monolithique. En d'autres termes, l'ensemble de composants RF 2 et l'élément rayonnant 4 forme un bloc unique comprenant le même matériau. Ce mode de réalisation limite les contraintes mécaniques liées aux différences de coefficients thermiques de l'ensemble de composants RF 2 et de l'élément rayonnant 4.

Le matériau généralement utilisé pour la fabrication d'une source d'antenne 1 est l'aluminium toutefois tout autre matériau adapté pour l'échange thermique et le rayonnement des ondes électromagnétiques peut être utilisé.

La source comprend en outre un moyen de transfert 5 de l'énergie thermique de l'ensemble de composants RF 2 vers l'élément rayonnant 4.

Les moyens de transfert thermique 5 s'étendent depuis l'ensemble de composants RF 2 vers l'élément rayonnant RF 4 et sur au moins une partie de l'élément rayonnant RF 4 sensiblement selon un axe longitudinal AL de la source, cet axe correspondant à celui selon lequel le faisceau se développe principalement.

Avantageusement, le moyen de transfert thermique 5 est un barreau conducteur thermique. Préférentiellement, le moyen de transfert thermique 5 est muni de fluide caloporteur tels un caloduc ou une boucle diphasique fluide. Les caloducs et les boucles diphasiques ont des capacités de réjection thermique plus importantes que celles des barreaux conducteurs thermiques.

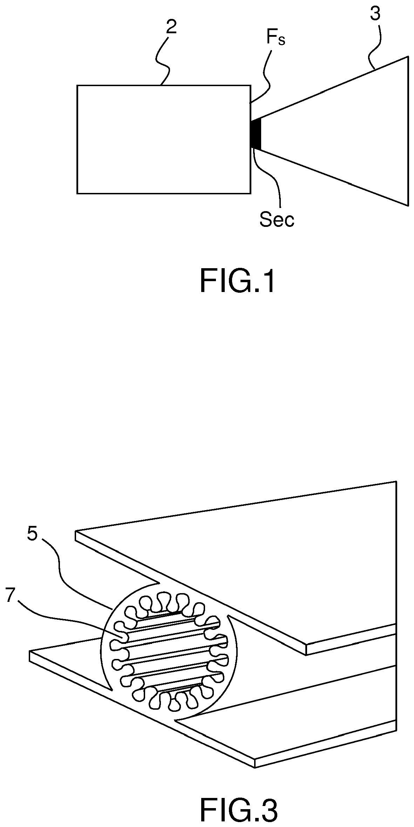

Avantageusement, les moyens de transfert thermique présentent des cannelures 7, telles que représentés sur la figure 3, de manière à accroître la surface d'échange thermique entre le moyen de transfert thermique 5 et l'ensemble de composants RF 2 d'une part et le moyen de transfert thermique 5 et l'élément rayonnant 4 d'autre part. En l'espèce, le moyen de transfert thermique 5 est un caloduc. L'énergie thermique emmagasinée au niveau de l'ensemble de composants RF 2 change l'état physique du fluide caloporteur circulant dans le caloduc. Le fluide caloporteur passe d'un état liquide à un état gazeux. Le fluide sous forme vapeur se déplace vers l'élément rayonnant 4, l'énergie thermique est transmise à l'élément rayonnant par conduction qui l'évacue vers l'Espace par rayonnement. Le fluide caloporteur repasse alors vers l'état liquide.

Avantageusement, les moyens de transfert thermique 5 s'étendent sur au moins une partie de l'ensemble de composants RF 2 de manière à récupérer l'énergie thermique dissipée par les composants RF 2.

Avantageusement, les moyens de transfert thermique 5 s'étendent sur au moins une partie de la surface rayonnante. Préférentiellement, les moyens de transfert thermique 5 s'étendent sur l'élément rayonnant 4 de sorte que le transfert d'énergie de l'ensemble de composants RF 2 rayonnant vers l'élément rayonnant 4 est homogène sur toute la surface de l'élément rayonnant 4.

Avantageusement, les moyens de transfert thermique 5 s'étendent à la surface de l'ensemble de composants RF 2 et/ou à la surface de l'élément rayonnant 4. Alternativement, les moyens de transfert thermique 5 s'étendent à l'intérieur ou dans l'épaisseur de l'élément rayonnant 5.

Avantageusement, l'élément rayonnant 4 est de forme conique, alternativement l'élément rayonnant peut être de forme pyramidale, conique tronquée ou toute autre forme adaptée pour l'adaptation progressive des ondes électromagnétiques et qui offre une surface d'échange thermique importante. La forme conique de l'élément rayonnant 4 est plus efficace qu'une forme plane. En effet, la forme conique offre une plus grande surface d'échange thermique avec l'Espace et réduit la sensibilité de l'élément rayonnant 4 au rayonnement solaire. En d'autres termes, l'élément rayonnant 4 de forme conique ne reçoit le rayonnement solaire de manière directe ou perpendiculaire uniquement sur une ligne, le reste de la surface de l'élément rayonnant ne recevant le rayonnement solaire que de anière indirecte.

Avantageusement, l'élément rayonnant 4 présente des protubérances externes 6 en forme « d'iroquois », comme indiqué sur la figure 2b permettant d'augmenter la surface d'échange thermique entre l'élément rayonnant 4 et l'Espace. Avantageusement, les moyens de transfert thermique 5 s'étendent à l'intérieur des protubérances 6.

Avantageusement, la surface externe de l'élément rayonnant 4 est recouverte d'une peinture blanche ou d'éléments OSR.

Avantageusement, l'ensemble de composants RF 2, l'élément rayonnant 4 et le moyen de transfert thermique 5 sont monolithiques. En d'autres termes, l'intégralité de la source 1 forme un bloc unique. Alternativement, les moyens de transfert thermique 5 comprennent un matériau différent de celui de la source 1.

Le procédé mis en oeuvre pour la réalisation d'une source d'antenne 1 selon l'invention utilise une méthode additive pour la fabrication du monobloc formant la source 1. La méthode additive la plus adaptée semble être la fusion sélective par laser ou « Selective Laser Melting » (SLM), en langue anglaise. Cette méthode permet la fabrication de pièce complexe avec beaucoup de précision et une qualité de surface acceptable.

La méthode de fusion sélective par laser est capable de réaliser des pièces métalliques à l'aide d'un laser de haute puissance en faisant fusionner progressivement et localement, ou, en d'autres termes, de manière sélective une poudre métallique dans une atmosphère contrôlée.

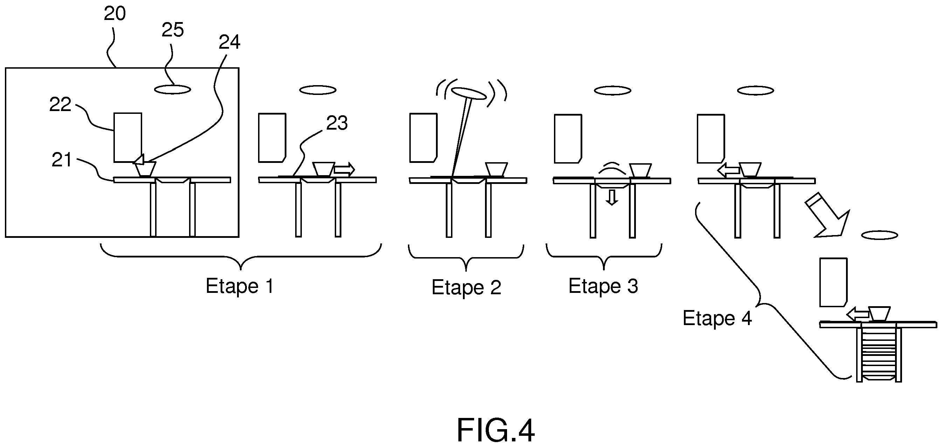

La figure 4 représente un schéma de principe de la méthode de fusion sélective par laser.

La figure 4 représente un dispositif adapté pour la mise en oeuvre de la méthode SLM. Le dispositif 20 comprend un plateau 21 et un réservoir distributeur 22 de poudre métallique 23, la poudre métallique pouvant comprendre de l'aluminium, du titane, du cuivre ou de l'invar. Après remplissage d'un chariot 24 de poudre métallique, celui-ci vient épandre, dans une première étape, une fine couche métallique sur un plateau 21. Un laser 25 de forte puissance vient ensuite faire entrer en fusion la poudre métallique 23 sur une partie sélectionnée de la couche métallique 23. Après refroidissement de la poudre métallique 23 en fusion, il se forme une couche métallique dense. Le procédé est ensuite reproduit couche par couche jusqu'à former la pièce désirée.

Ce procédé permet ainsi de former une source monobloc comprenant un ensemble de composants RF, un élément rayonnant et un moyen de transfert thermique récupérant l'énergie thermique dissipée depuis l'ensemble de composants RF 2 et de la transférer vers l'élément rayonnant 3.

Alternativement, le procédé mis en oeuvre pour la réalisation de la source d'antenne 1 utilise une méthode d'électroformage. Cette technique consiste à effectuer un dépôt métallique sur un support par voie chimique. Lorsque l'épaisseur voulue est atteinte, la pièce est séparée de son support.

Alternativement, le procédé mis en oeuvre pour la réalisation de la source d'antenne 1 utilise une méthode de fabrication additive.

## Revendications

1. Source monolithique d'antenne pour application spatiale comprenant :
- un ensemble de composants RF (2) véhiculant des ondes électromagnétiques et dissipant de l'énergie thermique, et
- un élément rayonnant RF (4) ayant une surface rayonnante de révolution ou pyramidale,
la source comprenant en outre des moyens de transfert thermique (5) s'étendant depuis l'ensemble de composants RF (2) vers l'élément rayonnant RF (4) et sur au moins une partie de l'élément rayonnant RF (4) sensiblement selon un axe longitudinal (AL) de la source, l'élément rayonnant RF (4) étant apte à évacuer de l'énergie thermique par rayonnement thermique, et le moyen de transfert thermique (5) étant un caloduc ou une boucle diphasique fluide.

2. Source monolithique d'antenne selon la revendication 1 dans laquelle l'élément rayonnant RF est en forme de cône.

3. Source monolithique d'antenne selon l'une des revendications précédentes dans laquelle les moyens de transfert thermique (5) s'étendent sur au moins une partie de l'ensemble de composants RF (2).

4. Source monolithique d'antenne selon l'une des revendications précédentes dans laquelle les moyens de transfert thermique (5), l'élément rayonnant RF (4) et l'ensemble de composants RF (2) sont monolithiques.

5. Source monolithique d'antenne selon l'une des revendications 1 à 3 dans laquelle les moyens de transfert thermique (5) comprennent un matériau différent de celui de l'élément rayonnant RF (4) et de l'ensemble de composants RF (2).

6. Source monolithique d'antenne selon l'une des revendications précédentes dans laquelle les moyens de transfert thermique (5) s'étendent sur l'élément rayonnant RF (4) de sorte que le transfert d'énergie thermique des composants RF (2) vers l'élément rayonnant (4) est homogène sur toute la surface de l'élément rayonnant RF (4).

7. Source monolithique d'antenne selon l'une des revendications précédentes dans laquelle l'élément rayonnant (4) présente des protubérances (6) de manière à augmenter la surface d'échange thermique.

8. Procédé de réalisation d'une source monolithique d'antenne spatiale selon la revendication 1 comprenant un ensemble de composants RF (2) véhiculant des ondes électromagnétiques et dissipant de l'énergie thermique, et un élément rayonnant (4) ayant une surface rayonnante de révolution ou pyramidale, la source (1) comprenant en outre des moyens de transfert thermique (5) s'étendant depuis l'ensemble de composants RF (2) vers l'élément rayonnant RF (4) et sur au moins une partie de l'élément rayonnant RF (4) sensiblement selon un axe longitudinal (AL) de la source, l'élément rayonnant RF (4) étant apte à dissiper de l'énergie thermique est fabriqué par électroformage.

9. Procédé de réalisation d'une source monolithique d'antenne spatiale selon la revendication 1 comprenant un ensemble de composants RF (2) véhiculant des ondes électromagnétiques et dissipant de l'énergie thermique et un élément rayonnant RF (4) ayant une surface rayonnante de révolution ou pyramidale, la source (1) comprenant en outre des moyens de transfert thermique (5) s'étendant depuis l'ensemble de composants RF (2) vers l'élément rayonnant RF (4) et sur au moins une partie de l'élément rayonnant RF (4) sensiblement selon un axe longitudinal (AL) de la source, l'élément rayonnant étant apte à dissiper de l'énergie thermique est réalisée par une méthode de fabrication additive.

## Patentansprüche

1. Monolithische Antennenquelle zur räumlichen Anwendung, die Folgendes umfasst:
- einen Satz von RF-Komponenten (2), die elektromagnetische Wellen führen und Wärmeenergie ableiten, und
- ein RF-Strahlungselement (4) mit einer kreis- oder pyramidenförmigen Strahlungsfläche,
wobei die Quelle ferner Wärmeübertragungsmittel (5) umfasst, die von dem Satz von RF-Komponenten (2) zum RF-Strahlungselement (4) und über mindestens einen Teil des RF-Strahlungselements (4) im Wesentlichen gemäß einer Längsachse (AL) der Quelle verlaufen, wobei das RF-Strahlungselement (4) die Wärmeenergie durch thermische Strahlung evakuieren kann, und wobei das Wärmeübertragungsmittel (5) ein Wärmerohr oder ein Zweiphasen-Fluidkreislauf ist.

2. Monolithische Antennenquelle nach Anspruch 1, wobei das RF-Strahlungselement die Form eines Kegels hat.

3. Monolithische Antennenquelle nach einem der vorherigen Ansprüche, wobei die Wärmeübertragungsmittel (5) über mindestens einen Teil des Satzes von RF-Komponenten (2) verlaufen.

4. Monolithische Antennenquelle nach einem der vorherigen Ansprüche, wobei die Wärmeübertragungsmittel (5), das RF-Strahlungselement (4) und der Satz von RF-Komponenten (2) monolithisch sind.

5. Monolithische Antennenquelle nach einem der Ansprüche 1 bis 3, wobei die Wärmeübertragungsmittel (5) ein Material umfassen, das sich von dem des RF-Strahlungselements (4) und des Satzes von RF-Komponenten (2) unterscheidet.

6. Monolithische Antennenquelle nach einem der vorherigen Ansprüche, wobei die Wärmeübertragungsmittel (5) so über das RF-Strahlungselement (4) verlaufen, dass die Übertragung der Wärmeenergie von den RF-Komponenten (2) zum Strahlungselement (4) über die gesamte Oberfläche des RF-Strahlungselements (4) homogen ist.

7. Monolithische Antennenquelle nach einem der vorherigen Ansprüche, wobei das Strahlungselement (4) Vorsprünge (6) aufweist, die die Wärmeaustauschfläche vergrößern.

8. Verfahren zum Erzeugen einer räumlichen monolithischen Antennenquelle nach Anspruch 1, umfassend einen Satz von RF-Komponenten (2), die elektromagnetische Wellen führen und Wärmeenergie ableiten, und ein Strahlungselement (4) mit einer kreis- oder pyramidenförmigen Strahlungsfläche, wobei die Quelle (1) ferner Wärmeübertragungsmittel (5) umfasst, die von dem Satz von RF-Komponenten (2) zu dem RF-Strahlungselement (4) und über mindestens einen Teil des RF-Strahlungselements (4) im Wesentlichen gemäß einer Längsachse (AL) der Quelle verlaufen, wobei das RF-Strahlungselement (4) die Wärmeenergie ableiten kann und durch Galvanoformung hergestellt ist.

9. Verfahren zum Erzeugen einer räumlichen monolithischen Antennenquelle nach Anspruch 1, umfassend einen Satz von RF-Komponenten (2), die elektromagnetische Wellen führen und Wärmeenergie ableiten, und ein RF-Strahlungselement (4) mit einer pyramiden- oder kreisförmigen Strahlungsfläche, wobei die Quelle (1) ferner Wärmeübertragungsmittel (5) umfasst, die von dem Satz von RF-Komponenten (2) zu dem RF-Strahlungselement (4) und über mindestens einen Teil des RF-Strahlungselements (4) im Wesentlichen gemäß einer Längsachse (AL) der Quelle verlaufen, wobei das Strahlungselement, das die Wärmeenergie abführen kann, mit einem additiven Herstellungsverfahren erzeugt wird.

## Claims

1. A monolithic antenna source for use in space comprising:
- a set of RF components (2) conveying electromagnetic waves and dissipating thermal energy; and
- an RF radiating element (4) having a circular or pyramidal radiating surface,
the source further comprising thermal transfer means (5) extending from the set of RF components (2) to the RF radiating element (4) and over at least part of the RF radiating element (4) substantially along a longitudinal axis (AL) of the source, the RF radiating element (4) being capable of discharging thermal energy by thermal radiation, and the thermal transfer means (5) being a heat pipe or a two-phase fluid loop.

2. The monolithic antenna source as claimed in claim 1, wherein the RF radiating element is cone shaped.

3. The monolithic antenna source as claimed in any one of the preceding claims, wherein the thermal transfer means (5) extend over at least part of the set of RF components (2).

4. The monolithic antenna source as claimed in any one of the preceding claims, wherein the thermal transfer means (5), the RF radiating element (4) and the set of RF components (2) are monolithic.

5. The monolithic antenna source as claimed in claims 1 to 3, wherein the thermal transfer means (5) comprise a material different from that of the RF radiating element (4) and the set of RF components (2).

6. The monolithic antenna source as claimed in any one of the preceding claims, wherein the thermal transfer means (5) extend over the RF radiating element (4) so that the transfer of thermal energy from the RF components (2) to the radiating element (4) is homogenous over the entire surface of the RF radiating element (4).

7. The monolithic antenna source as claimed in any one of the preceding claims, wherein the radiating element (4) has protuberances (6) so as to increase the thermal exchange surface.

8. A method for producing a monolithic antenna source for use in space as claimed in claim 1, comprising a set of RF components (2) conveying electromagnetic waves and dissipating thermal energy and a radiating element (4) having a circular or pyramidal radiating surface, the source (1) further comprising thermal transfer means (5) extending from the set of RF components (2) to the RF radiating element (4) and over at least part of the RF radiating element (4) substantially along a longitudinal axis (AL) of the source, the radiating element RF (4) that is capable of dissipating thermal energy being manufactured by electroforming.

9. The method for producing a monolithic antenna source for use in space as claimed in claim 1, comprising a set of RF components (2) conveying electromagnetic waves and dissipating thermal energy and an RF radiating element (4) having a circular or pyramidal radiating surface, the source (1) further comprising thermal transfer means (5) extending from the set of RF components (2) to the RF radiating element (4) and over at least part of the RF radiating element (4) substantially along a longitudinal axis (AL) of the source, the radiating element that is capable of dissipating thermal energy being manufactured by an additive manufacturing method.
